# EUROPEAN PATENT APPLICATION

(11) **EP 1 961 495 A1**
(43) Date of publication of application: **27.08.2008**
(21) Application number: 06834153.6
(22) Date of filing: 30.11.2006
(51) Int. Cl.: B09B 3/00

(54) **REFUSE TREATMENT APPARATUS**

(30) Priority: 06.12.2005 JP 2005352081
(71) Applicant: Takeda, Morio, Osaka-Shi, Osaka 545-0022 (JP); Kawahara, Takeshi, Tokyo 150-0036 (JP); Yanai, Tetsuya, Amagasaki- Shi, Hyogo 660-0961 (JP); Takeda, Shigeji, Naha-Shi, Okinawa 900-0022 (JP)
(72) Inventor: KAWAHARA, Takeshi, Tokyo 150-0036 (JP); YANAI, Tetsuya, Amagasaki-Shi, Hyogo 660-0961 (JP); TAKEDA, Shigeji, Naha-Shi, Okinawa 900-0022 (JP)
(74) Representative: Hooiveld, Arjen Jan Winfried
(86) International application number: PCT/JP2006/324398
(87) International publication number: WO 2007/066702

(57) **Abstract**

The present invention relates to a waste disposing apparatus that, rather than using incineration, uses a system wherein heat is applied to a magnetic field generated by compounded granulated ores to promote the occurrence and activation of plasma, resulting in the maintenance of a high temperature in the disposing apparatus that is sufficient to subject to a high heat consumption disposing the waste placed therein. The waste disposing apparatus of the present invention comprises a main body of a rectangular shaped waste disposing apparatus, a waste input port and a shutter located on top thereof, an opening located near the bottom of a side face of the main body for inserting a heating material there into, and a plurality of pipe-inserting holes located in peripheral side faces thereof; wherein a plurality of pipes are inserted and fitted to all of the pipe-inserting holes in the direction of a hollow inside of the main body; and compounded granulated ores generating a magnetic field are placed on the base of the plurality of pipes located on the outside of side walls of the main body and on the bottom face of the main body.

## Description

### TECHNICAL FIELD

The present invention relates to a waste disposing apparatus for breaking down organic materials, and in particular, relates to a waste disposing apparatus having a structure where a plurality of pipes are installed in a disposing apparatus to provide effective disposing for consuming garbage (waste), where the waste is primarily organic materials, by activating plasma in the disposing apparatus.

### BACKGROUND ART

Conventionally, incineration is mainly used for waste disposal. However, a consumption disposing using incineration creates the problem of what to do with the residue, and when incinerating large quantities of waste, other significant problems arise, such as the need to construct a large-scale incineration facility, the ability to collect vast quantities of waste for incineration, and transportation of said waste to the incineration plant. Accordingly, the problems of waste disposing systems, waste disposal plants, and waste disposal dumps form significant issues for future urban government administrations.

In addition, in the case of incineration, smoke occurs as a part of the incineration process, and hence, a countermeasure against the smoke is necessary. Smoke from the waste incineration process causes significant problems, such as production of dioxin and compounds triggering ozone depletion, concerning global environment pollution that cannot be solved by an individual person or a single entity.

Furthermore, in the case where the incineration process is operated at a high temperature generated by the use of fossil fuels, further problems exist in that the running costs for a fossil fuel driven process are expensive, and a large quantity of residual ash is left over after the incineration process is complete. This ash must be disposed of somehow.

Accordingly, the development of a small waste disposing apparatus that could be used in homes is desirable. Furthermore, a method for breaking down waste that does not use an incineration method is being studied and expectations are high for the development of an apparatus that uses a different consuming system rather than the conventional incineration type disposing apparatuses presently available.

### DISCLOSURE OF THE INVENTION

In order to solve the problems described above, a waste disposing apparatus in accordance with the present invention aims to provide a waste disposing apparatus that, rather than using incineration, uses a system wherein heat is applied to a magnetic field generated by compounded granulated ores to promote the occurrence and activation of plasma, resulting in the maintenance of a high temperature in the disposing apparatus that is sufficient to subject to a high heat consumption disposing the waste placed therein.

The object of the present invention, as described above, is achieved by a waste disposing apparatus consuming waste which put into a main body of a rectangular shaped waste disposing apparatus through its top portion, wherein said main body of the waste disposing apparatus comprises a waste input port and a shutter, both being located on top thereof, an opening located near the bottom of a side face of said main body for inserting a heating material thereinto, and a plurality of pipe-inserting holes located in peripheral side faces thereof; wherein a plurality of pipes are inserted and fitted to all of said pipe-inserting holes in a direction of a hollow inside of said main body of the waste disposing apparatus, and compounded granulated ores generating a magnetic field are placed on the base of said plurality of pipes located on the outside of side walls of said main body of the waste disposing apparatus and on a bottom face of said main body of the waste disposing apparatus.

The object of the present invention is also achieved by the side walls of said main body of the waste disposing apparatus having a double wall structure which includes an intermediate plate having many small circular holes, and on the bottom face of said main body of the waste disposing apparatus, an iron-based bottom board having many circular holes are located.

The object of the present invention is also achieved by an opening on the end of said plurality of pipes being made into a sharp triangular shape by obliquely cutting them at a 45-degree angle to the direction of the axis of said pipes.

The object of the present invention is also achieved by said plurality of pipes being fitted to a lower half section of said main body of the waste disposing apparatus.

The object of the present invention is also achieved by said plurality of pipes being made from pipes having an identical diameter and at least three different lengths, wherein; short pipes having the shortest length of said plurality of pipes are arranged in an upper position, long pipes having the longest length of said plurality of pipes are arranged in a lower position, and middle pipes having the middle length of said plurality of pipes are arranged in a middle position between the upper and lower positions.

The object of the present invention is also achieved by said long pipes having an opening of one end thereof being tilted downward slightly and three holes being located along the lower side of said long pipes at intervals of approximately 1 cm.

The object of the present invention is also achieved by said plurality of pipes having a valve, each of which is opened to draw air into said main body of the waste disposing apparatus, located at the base thereof.

The object of the present invention is also achieved by said compounded granulated ores being placed at the end of the base of said pipes, which are arranged at the lowest position of said plurality of pipes to surround an air passage that allows air to pass through.

The object of the present invention is also achieved by said compounded granulated ores comprising at least one material selected from a group, including magnetite ores, a neodymium, tourmaline ores, and amethyst ores

By utilizing the waste disposing apparatus provided by the present invention, as described above, the following (1) to (6) effects can be achieved.
(1) The structure of the apparatus provided by the present invention is simple, and therefore, has an advantage of being able to repair easily when a fault occurs. As the system does not utilize an incineration process, there is no fuel for combusting is required and operating cost can be significantly reduced. As there is no incineration, there is no residue to treat and remove. Furthermore, as no smoke is generated, the apparatus can prevent the generation of dioxin and ozone depletion on a global scale. In addition, the apparatus is of a small scale, which enables it to be provided at a low cost and it can be easily installed and operated in a yard or vacant lot for household use.
(2) The plurality of pipes is fitted to the lower half of the main body of the rectangular shaped waste disposing apparatus and, thus, the waste placed into the waste disposing apparatus is completely consumed.
(3) There are three different lengths of pipes to be fitted and, therefore, regardless of shapes and sizes of the waste, waste of any shape placed into the waste disposing apparatus can be effectively processed.
(4) The pipes fitted at the lowest position are the longest pipes and, hence, any waste remaining in the apparatus will be treated as it is ensured of being exposed to the plasma, thereby preventing any waste from remaining.
(5) The effect of the plasma can be increased by opening the valve to draw sufficient air into the waste disposing apparatus. The effect of the plasma can be further increased by arranging the compounded granulated ores around the air inlet.
(6) The compounded granulated ores comprising magnetite ores, a neodymium, tourmaline ores, and amethyst ores can produce the plasma efficiently.

Furthermore, these materials are easily obtained.

### BRIEF DESCRIPTION OF THE DRAWINGS

FIG. 1 is a perspective view showing a waste disposing apparatus according to the present invention.
FIG. 2 (a) and (b) are the front view and side view, respectively, of the waste disposing apparatus according to the present invention.
FIG. 3 (a) is the plan view of an intermediate plate of a lateral side face of the rectangular main body of the waste disposing apparatus according to the present invention.
FIG. 3 (b) is the plan view of an intermediate plate of a side face in the depth direction of the rectangular main body of the waste disposing apparatus according to the present invention.
FIG. 4: (a) is the plan view of the base of the pipe, showing a valve, and the compounded granulated ores; and (b), (c), (d), and (e) are sectional views of the pipe having a middle length, the long pipe, and the short pipe, and an alternative configuration of the long pipe, respectively.

### BEST MODE FOR CARRYING OUT THE INVENTION

The waste disposing apparatus according to the present invention will now be described in detail with the reference to the various embodiments expressed by each drawing.

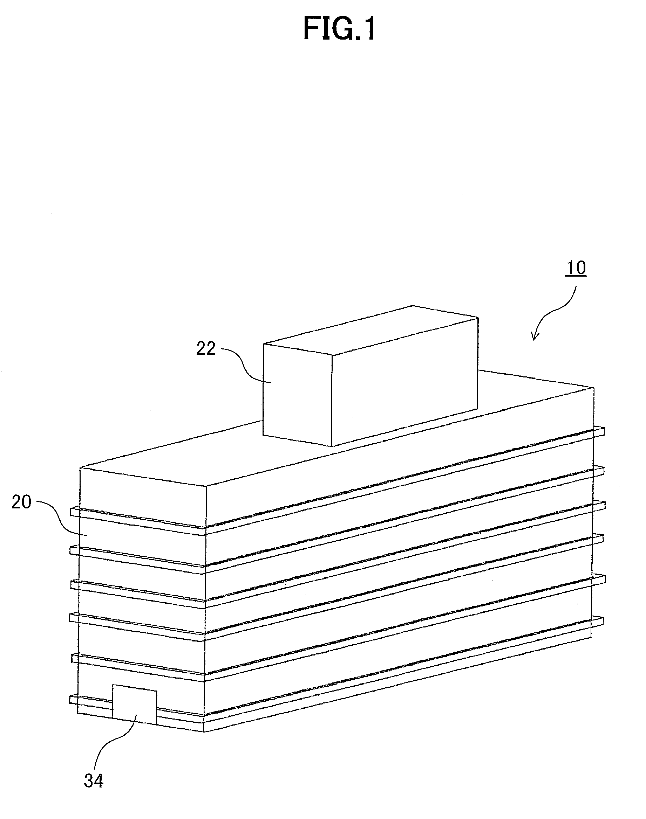

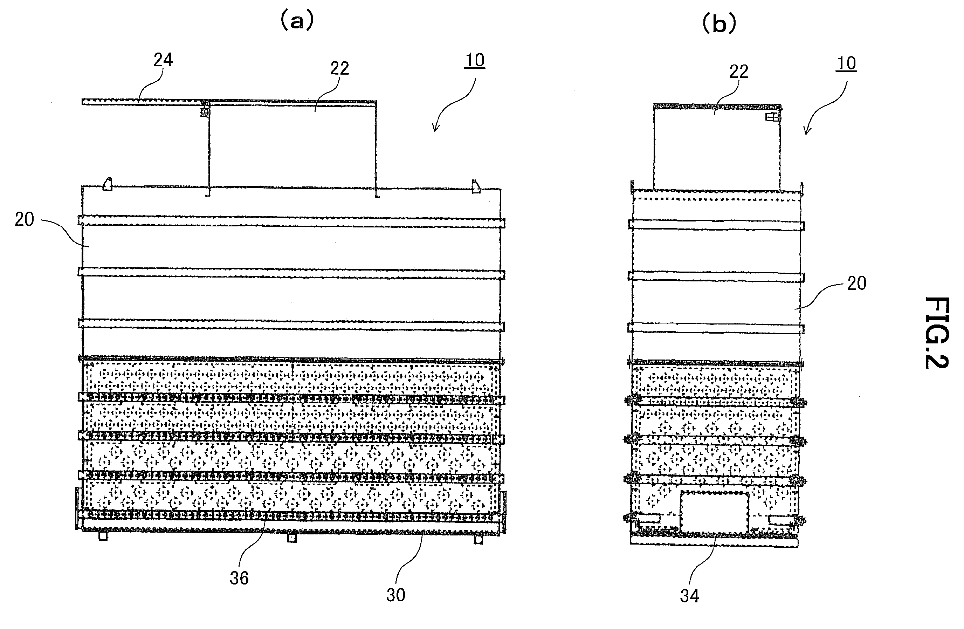

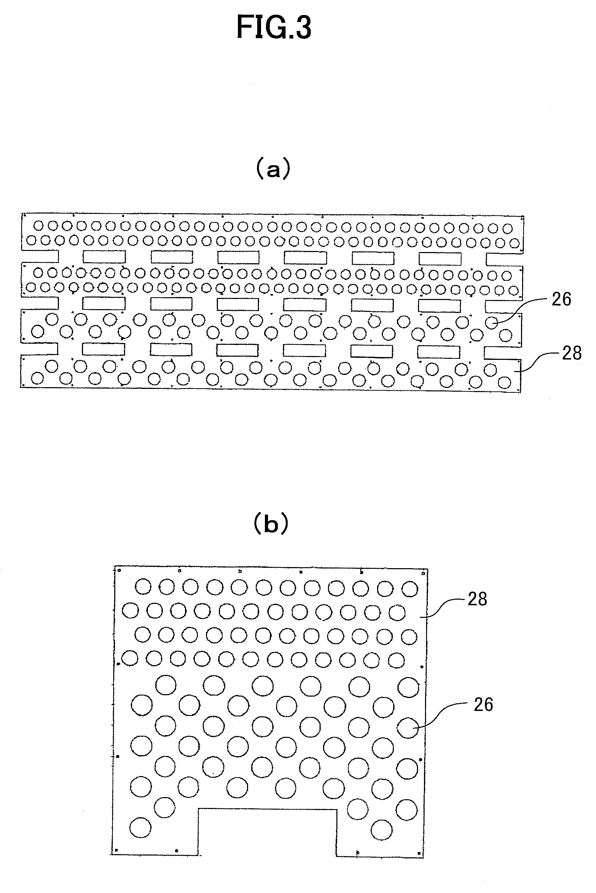

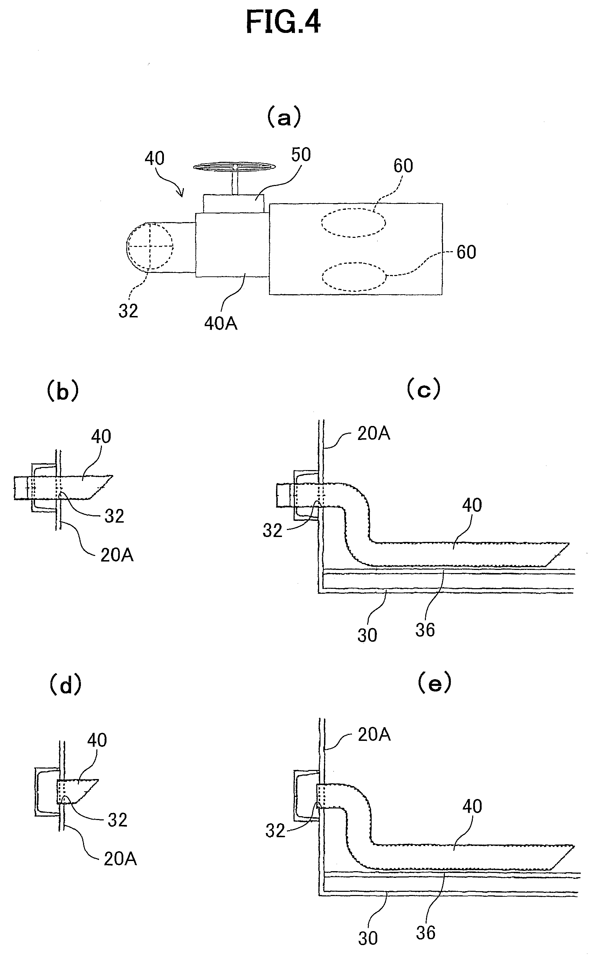

FIG. 1 is a perspective view showing a waste disposing apparatus according to the present invention. FIG. 2 (a) and (b) are the front view and side view respectively of the waste disposing apparatus according to the present invention. FIG. 3 (a) is the plan view of an intermediate plate of a lateral side face of the rectangular main body of the waste disposing apparatus according to the present invention. FIG. 3 (b) is the plan view of an intermediate plate of a side face in the depth direction of the rectangular main body of the waste disposing apparatus according to the present invention. FIG. 4: (a) is the plan view of the base of the pipe, showing a valve, and the compounded granulated ores; and (b), (c), (d), and (e) are sectional views of the pipe having a middle length, the long pipe, and the short pipe, and an alternative configuration of the long pipe, respectively.

A waste disposing apparatus 10 according to the present invention comprises a main body 20 of the waste disposing apparatus, a pipe 40, a valve 50, and compounded granulated ores 60.

The waste disposing apparatus 10 is configured to receive garbage (waste) for disposing through a waste input port 22 located on top of the main body 20 of the waste disposing apparatus 10. The waste disposing apparatus 10 then ignites a heating material and activates plasma from an opening located on a side face of the main body 20 of the waste disposing apparatus 10, which is configured to insert the heating material into the main body 20. After an appropriate length of time for the introduction of air has been determined, the waste disposing apparatus 10 opens the valve 50 located at a base 40A of the tube 40 and, the air contacted with the compounded granulated ores 60 for generating the magnetic field is inserted into the main body 20 of the waste disposing apparatus resulting in the waste located in the waste disposing apparatus 10 being subjected to a carbonization process.

The main body 20 of the waste disposing apparatus 10 is composed of a rectangular box and a bottom face 30, which includes the compounded granulated ores for generating the magnetic field. The waste input port 22 is located on top of the main body 20 of the waste disposing apparatus 10, and a shutter 24 is installed in the waste input port 22. The waste to be treated is passed into the main body 20 of the waste disposing apparatus 10 from the top through the waste input port 22 and the shutter 24 is then closed.

The side walls of the main body 20 of the waste disposing apparatus 10 include a double wall structure. On the internal side of the side walls, an intermediate plate 28 is mounted and many small holes 26 are made through the surface of the intermediate plate 28. The objective of these small holes is to improve the heat efficiency of the main body 20 of the waste disposing apparatus 10, allowing for the generating a high temperature but also placing an air layer on the internal side of the side walls in order to prevent overheating of external walls of the waste disposing apparatus 10 due to contact of the heated air with the side walls. Accordingly, the function of the small holes is to cool the external walls while at the same time also improving the air flow.

It is important to note that the method of disposing of waste according to the present invention is not by incineration, but rather is by consuming due to extreme heat, which is produced by the plasma generated by the magnetic field, which carbonizes the waste.

The bottom face 30 of the main body 20 of the waste disposing apparatus 10 is composed of the compounded granulated ores for generating the magnetic field, and around the bottom of the main body 20, at the lowest portion of one of the side faces is an opening 34 which is configured to insert the heating material into the main body 20. After placing the waste into the waste disposing apparatus 10, the heating material is inserted into through the opening 34. The heat from the heating material is then applied to the inside of the main body 20 of the waste disposing apparatus 10 to activate the plasma generated by the compounded granulated ores that comprise the bottom face 30. Activated plasma generates heat, so that heating and activating plasma enhances each other. Furthermore, the introduction of external air via the compounded granulated ores 60, as will be described later, enables the inside of the main body 20 of the waste disposing apparatus10 to be heated even further.

The heating material to be inserted, in the present embodiment, may be a heating body such as a soldering iron capable of being electrically heated. However, it should be appreciated that the heating body to be introduced is not restricted to this. As the heating material is not be incinerated, the heating material may not be a combustible material and, for instance, heated iron may be used as the heating material to produce a similar effect.

On a peripheral side face 20A of the main body 20 of the waste disposing apparatus 10, a plurality of pipe insertion holes 32 is made. The pipe 40 is inserted through each of the pipe insertion holes 32 to hollow inside the main body 20 of the waste disposing apparatus 10, and the inserted pipes are fitted and adhered in place.

The pipe 40 to be inserted and fitted is configured so that the opening of the end of the pipe is cut obliquely at a 45-degree angle to the direction of the pipe axis and is formed in a triangular shape having a sharpened end. The number of pipes 40 to be inserted and fitted will vary according to the size of the main body 20 of the waste disposing apparatus 10. According to the present embodiment, 112 short pipes, 330 middle length pipes, and 16 long pipes are mounted.

These pipes 40 are inserted from the outside of the side walls of the main body 20 of the waste disposing apparatus 10 and penetrate through the side faces of the main body 20 of the waste disposing apparatus 10. The base 40A of each pipe 40 located on the outside of the side walls has the valve 50 that opens and closes a plug.

Each pipe 40 is an air passage for introducing the external air to the inside of the main body 20 of the waste disposing apparatus 10. With increasing temperature of the main body 20 of the waste disposing apparatus 10, convection currents occur in the main body 20 of the waste disposing apparatus 10, which allow the external air to be drawn in. Then when each valve 50 is opened, the external air is drawn into the main body 20 of the waste disposing apparatus 10.

On the end (on an air inlet side) of the valve 50 of the base 40A of the pipe arranged at the lowest layer of the plurality of pipes 40, the compounded granulated ores 60 is arranged to surround the air passage in order to magnetize the air. As the air introduced to the main body 20 of the waste disposing apparatus 10 is magnetized by the compounded granulated ores 60, it also enhances the heating effect.

According to the present embodiment, the compounded granulated ores 60 is arranged on the end of each valve 50 of the base 40A of each pipe 40 arranged at the lowest layer. However, it should be appreciated that the present invention is not restricted to such, and, for example, the compounded granulated ores 60 for generating the magnetic field may be placed on the base 40A of all the pipes 40 inserted in and fitted to the plurality of pipe insertion holes 32 located on the peripheral side face 20A of the main body 20 of the waste disposing apparatus 10.

According to the present embodiment, the plurality of pipes 40 are inserted in and fitted to the lower half of the main body 20 of the waste disposing apparatus 10. However, it should be appreciated that the fitting position of the plurality of pipes 40 is not restricted to the present embodiment.

The plurality of pipes 40, according to the present embodiment, which is inserted in and fitted to the pipe insertion holes 32, is composed of three kinds of pipes having the same diameter but different lengths. The short pipes, having the shortest length of the three pipes, are arranged in the top layer, the long pipes, having the longest length of the three pipes, are arranged in the bottom layer, and the middle pipes, having the middle length of the three pipes length pipes, are arranged in the middle layer between the top layer and the bottom layer. It is not essential that these pipes have an identical diameter, and the lengths are not restricted to those described in the present embodiment, which are different three lengths in this instance.

For the long pipe 40 arranged in the bottom layer, the cut face of the opening of the end is preferably tilted downward slightly and the lower side of pipe 40 includes three holes spaced apart at intervals of approximately 1 cm. As such, the occurrence of the plasma can be further enhanced.

The bottom face 30 of the main body 20 of the waste disposing apparatus 10 is composed of the compounded granulated ores for generating the magnetic field, and the compounded granulated ores are similar to the compounded granulated ores 60 arranged in the air passage of each base 40A of each pipe 40, as described above. The compounded granulated ores may not necessarily be identical and the ratio of materials included in such may vary accordingly.

An iron-based bottom board 36 in which a large number of circular holes are made is mounted on the bottom face 30 composed of the compounded granulated ores 60. The iron-based bottom board 36 is designed to provide effective consunptive disposing in all regions of the main body 20 of the waste disposing apparatus 10.

The compounded granulated ores 60 placed on the bottom face 30 of the main body 20 of the waste disposing apparatus 10, and the base 40A of each pipe 40 preferably comprises at least one material selected from a group including magnetite ores, a neodymium, tourmaline ores, and amethyst ores. According to the present embodiment, magnetite ores produced in Miyako is used. This may be sourced from Touno. The mixing ratio of the various materials in the compounded granulated ores can vary according to each individual case. However, the ratio of materials used in the present embodiment is 3/6 (1/2) magnetite ores produced in Miyako, 1/6 neodymium, 1/6 tourmaline ore, and 1/6 amethyst ore.

### INDUSTRIAL APPLICABILITY

As described above, the present invention can be applied to a small-scale waste disposing apparatus and is beneficial in efficiently treating garbage (waste) while preventing the formation of dioxin and ozone depleting compounds.

## Claims

1. A waste disposing apparatus consuming waste which put into a main body of a rectangular shaped waste disposing apparatus through its top portion, **characterized in that**
said main body of the waste disposing apparatus comprises a waste input port and a shutter, both being located on top thereof, an opening located near the bottom of a side face of said main body for inserting a heating material thereinto, and a plurality of pipe-inserting holes located in peripheral side faces thereof;
wherein a plurality of pipes are inserted and fitted to all of said pipe-inserting holes in the direction of a hollow inside of said main body of the waste disposing apparatus; and
compounded granulated ores generating a magnetic field are placed on the base of said plurality of pipes located on the outside of side walls of said main body of the waste disposing apparatus and on a bottom face of said main body of the waste disposing apparatus.

2. The waste disposing apparatus according to claim 1, wherein the side walls of said main body of the waste disposing apparatus have a double wall structure which includes an intermediate plate having many small circular holes, and on the bottom face of said main body of the waste disposing apparatus, an iron-based bottom board having many circular holes are located.

3. The waste disposing apparatus according to claim 1 or 2, wherein an opening on the end of said plurality of pipes is made into a sharp triangular shape by obliquely cutting them at a 45-degree angle to the direction of the axis of said pipes.

4. The waste disposing apparatus according to claim 1 to 3, wherein said plurality of pipes are fitted to a lower half section of said main body of the waste disposing apparatus.

5. The waste disposing apparatus according to claim 1 to 4, wherein said plurality of pipes are made from pipes having an identical diameter and at least three different lengths, wherein;
short pipes having the shortest length of said plurality of pipes are arranged in an upper position,
long pipes having the longest length of said plurality of pipes are arranged in a lower position, and
middle pipes having the middle length of said plurality of pipes are arranged in a middle position between the upper and lower positions.

6. The waste disposing apparatus according to claim 5, wherein said long pipes having an opening of one end thereof are tilted downward slightly and three holes are located along the lower side of said long pipes at intervals of approximately 1 cm.

7. The waste disposing apparatus according to claim 1 to 6, wherein said plurality of pipes have a valve, each of which is opened to draw air into said main body of the waste disposing apparatus and located at the base thereof.

8. The waste disposing apparatus according to claim 1 to 7, wherein said compounded granulated ores are placed at the end of the base of said pipes, which are arranged at the lowest position of said plurality of pipes to surround an air passage which allows air to pass through.

9. The waste disposing apparatus according to claim 1 to 8, wherein said compounded granulated ores comprises at least one material selected from a group including magnetite ores, a neodymium, tourmaline ores, and amethyst ores.
